# EUROPEAN PATENT APPLICATION

(11) **EP 3 372 075 A1**
(43) Date of publication of application: **12.09.2018**
(21) Application number: 16861657.1
(22) Date of filing: 04.11.2016
(51) Int. Cl.: A01M 1/10, A01M 23/08

(54) **WASP-CAPTURING DEVICE**

(30) Priority: 04.11.2015 ES 201531585
(71) Applicant: Astiz Igoa, Ernesto, 31620 Huarte (ES)
(72) Inventor: Astiz Igoa, Ernesto, 31620 Huarte (ES)
(86) International application number: PCT/ES2016/070780
(87) International publication number: WO 2017/077161

(57) **Abstract**

The invention relates to a wasp-capturing device for use in apiaries, which comprises a mesh or grid enclosure or covering (1) that covers the apiary from above, occupying at least the area located in front of the beehives and bordering the entrance holes thereof, but without completely closing the apiary, since the covering does not reach the ground on all sides. The covering mesh (1) comprises holes of a size sufficient to allow the passage therethrough of the bees but prevent the passage of Asian wasps. The device further comprises at least one collecting element (2) for gathering the wasps, which comprises a directing ramp (3) for directing the insects towards a selecting chamber (4) through an entrance hole (8) having a constricted configuration, and at least one trapping tank (6) with access from the selecting chamber (4) through a hole (5).

## Description

This invention refers to a wasp-capturing device and particularly to a device for capturing the so-called Asian wasp (Vespa velutina nigrithorax), intended to be used in an apiary of bees using the bees themselves as bait.

The purpose of the invention is to achieve the large-scale but highly selective capture of Asian wasps, an invasive species in our ecosystem that is in the midst of an expansion process in the region and is also a voracious predator of the Western honey bee (Apis mellifera), with the wasp-capturing device allowing the bees to work normally as they do not see any danger in the entrance to the hive.

### BACKGROUND TO THE INVENTION

There are various known devices and measures for capturing Asian wasps that are based on the use of different baits to attract the wasps to a trap, which is generally in the shape of a funnel. Some of these take advantage of the smaller size of bees compared to Asian wasps, so they can be captured without harming the bees.

Among other devices, we can cite the one described in utility model ES 1079038 U, which consists of a device that establishes a trap with small-sized bait to capture the wasps.

These methods are not fully effective in their operation because the bee is a much more attractive bait than any other. Only a few wasps are attracted by the "artificial" bait that, in addition, is small in size and not susceptible to being scaled up to much larger sizes and therefore cannot be used for medium or large apiaries with a large number of hives. In this case, it is necessary to resort to a large number of such traps and this entails a consequent higher cost.

Utility model ES 1078754 U, referring to a wasp-capturing device in beehives, describes the presence in this of holes of approximately 5.5 mm that allow the bees to leave the trap as they are smaller than 5.5 mm, but prevent the Asian wasps from leaving as they are larger than this 5.5 mm. It also describes the presence of a net with holes of approximately 8-10 mm that allow the passage of the wasps.

The document KR 20090009148U U describes a wasp-capturing trap that, intended for use in bee-keeping farms, consists of a bait trap whose size and set-up means that it cannot be used for an entire apiary as its outer mesh enclosure would need to reach a size that would make it infeasible. In addition, it would have little impact on Asian wasp workers (Vespa velutina nigrithorax), whose behavioural pattern leads them to perform predatory activity, basically attracted by live Western honey bees and never by inert baits.

Both the scientific literature and bee-keeping practice have established the size for bees to be able to pass, also known as "bee space", which was discovered by Lorenzo Lorraine Lanstroth, referring to the distance that must exist between the frames or combs of a hive so that the bees (Apis Mellifera) can circulate between them and that should never be less than 5 mm.

It should be taken into account that, as mentioned above, Asian wasps are insects that mainly capture bees and their speciality is to enter static flight in front of the hives in order to capture these bees when they return or swarm in the opening of the hive or entrance. This causes two types of damage to take into account. On the one hand, a decrease in the number of bees in the hive and, on the other, a slow-down in the functioning of the hive itself, as the bees are forced to group together at the entrance to defend it instead of carrying out their main tasks such as rearing larvae, collecting food (nectar and pollen) and other tasks necessary for maintaining the hive.

Enclosures can also be created that cover the apiary with mesh or nets that allow the bees to pass but not the wasps, preventing the entry of the wasps into the area around the hives and the besieging of the entrance. However, this does not prevent them from attacking the bees when they leave the enclosure, which is essential for their life cycle and the maintenance of the hive. Therefore, these enclosures are merely defensive as they do not capture the wasps and their predatory action against the bees outside this enclosure is not prevented.

Therefore, there is no known device that, on the one hand uses the bees themselves as bait and, on the other takes advantage of the departure flight behaviour of the wasps to capture them and also works for large apiaries, in accordance with the characteristics of the device that will be described below.

### DESCRIPTION OF THE INVENTION

The wasp-capturing device suggested fully and satisfactorily resolves the problem mentioned above, in such a way that, using the bees themselves as bait, it allows the Asian wasps to enter the area around the hives and captures them as they leave or return to the nest, drastically reducing the number of these wasps and thus relieving the pressure on the hive.

To do this, the invention is based on a wasp-capturing device that, in short, is basically made up of two elements: the first is a mesh or net enclosure that covers the apiary, whose function is to channel the exiting wasps towards the second element of the device, which is one or more collectors that serve as both a filter or selector and a wasp storage chamber or trap.

The apiary is covered with a mesh or net enclosure with an aperture or hole size that allows bees to pass through to enter or exit the apiary but does not allow wasps to pass through as they are much larger and even more so when carrying the captured bees. However, the enclosure is not completely closed but is instead open at the bottom so that the wasps can enter through this opening at the bottom to attack the hives and capture the bees.

When a wasp captures a bee or simply exits the apiary, it tends to fly upwards and during this vertical movement it will come up against the mesh or net that prevents it from passing through, forcing it to search for the exit and channelling it into one or more collectors, which may be of different sizes, located at the top of the enclosure. These collectors are comprised of a directing or deflecting ramp, a funnel-type entrance into a selecting chamber and one or more trap storage chambers to collect the trapped wasps.

Thus, the exit of the wasps from the hive area is impeded by the mesh or net cover that directs them towards the collector or collectors. The wasps either enter directly through the funnel-type entrance of the collector into the selecting chamber or land on the directing ramp, which acts as a deflector to channel them towards the funnel entrance to the selecting chamber. This ramp also acts as the first filter as it has holes that are smaller than the wasp but allow bees to pass through.

The selecting chamber is comprised of a transit mesh that allows insects smaller than wasps, such as bees, to exit, in such a way that it again filters the wasps which cannot exit either through the entrance, due to it being shaped like a funnel, or through the holes in the mesh. The only possible route offered is through the hole providing entry to the trap storage chamber, where they are held until they are later removed.

It is useful for there to be ventilation of the collector and especially the trap storage chamber to ensure that the temperature is not too high, as Asian wasps cannot tolerate heat and this would act as a repellent, causing an adverse effect that would drastically reduce the effectiveness of the collector. Given this, there are ventilation openings that also help the bees, allowing them to stay alive until they find the exit.

In short, through the device that can be used on a full apiary or a portion of this, the pressure caused by the Asian wasp is drastically reduced as they are gradually and continuously removed without the bee-keeper having to go to the apiary every day or place bait, as the bees themselves are used as bait to trap the wasps.

### DESCRIPTION OF THE DRAWINGS

To supplement the following description and to help achieve a better understanding of the invention's features, in accordance with a preferred embodiment example of this, a set of drawings are provided as an integral part of that description, in which at least the following has been represented:

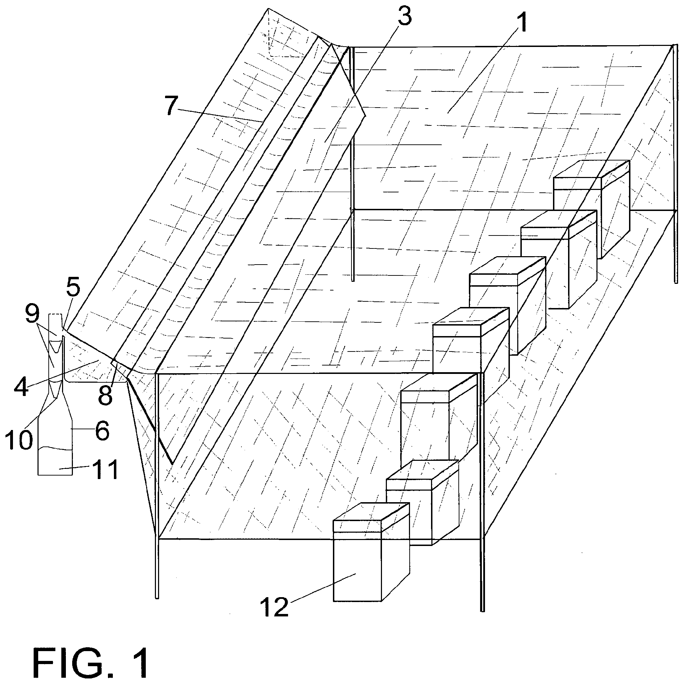

Figure 1. Shows a schematic representation in perspective of the wasp-capturing device made in accordance with the purpose of this invention, containing 7 hives as an example.

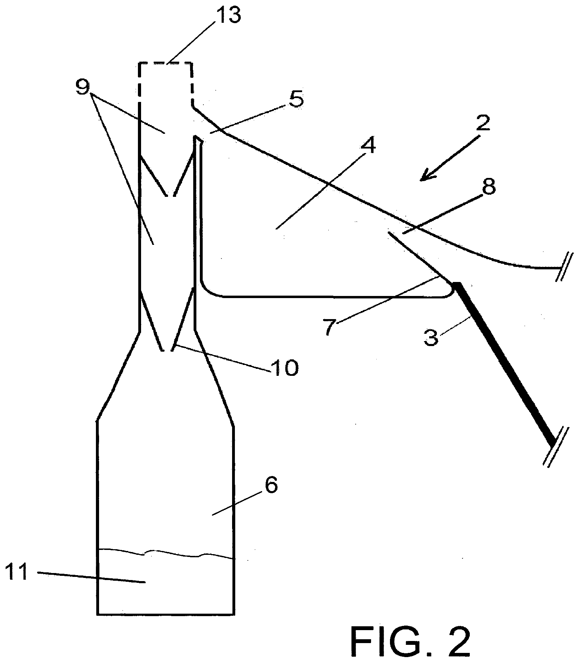

Figure 2. Shows a schematic cross-sectional representation of the details corresponding to the collecting element.

### PREFERRED EMBODIMENT OF THE INVENTION

As can be seen in the figures shown, the invention is intended to be used for a group of hives (12), either a complete apiary or portions of this.

The device is fitted with the hives (12) inside it, or sufficiently close to these hives so as to cover the area situated in front of the hives and specifically the area adjoining or adjacent to their entrances, creating a non-complete cover of these using a net or mesh whose hole size, approximately between 5 and 10 mm, allows bees to pass through but hinders the passage of Asian wasps because they are larger in size and this size increases when they are carrying the captured bee, making it impossible to for them to pass through in flight and leave the apiary.

The device would also be effective even if the hives (12) were not inside it but were in its immediate proximity, as long as it covered the action radius of the bees flying into and out of their hives.

The mesh or net enclosure or covering (1) covers the top of the apiary without completely closing off the sides, for example not reaching the ground, thus allowing the wasps to enter at the bottom. Due to their nature they will attack the hives (12) to capture the bees. They then move away from the apiary, an action that they generally carry out by flying upwards and outwards away from the hives (12), in that flight they come across the upper part of the covering (1) where they will continue to search for an exit, always with this tendency to fly upwards and outwards, eventually being channelled towards the collecting element (2), which in turn consists of a directing ramp (3), selecting chamber (4) and trap storage chamber (6), and that is situated at the top of the covering (1).

The directing ramp (3) has a deflecting function to direct the insects towards the selecting chamber (4) and also acts as a first filter due to having holes that are larger than 5mm and smaller than 8mm, that are too small for the wasps to pass through but sufficiently large for bees and other similar sized or smaller insects to pass through. Because of this, the wasps can land on it but cannot pass through it and will be channelled in an upward inclined direction towards the opening (8) to the selecting chamber (4), the opening (8) having a funnel-type constricted configuration on narrowing as it enters the selecting chamber (4) that the wasps cannot exit from as they find it very difficult to find the aforementioned narrowing of the opening (8) which is also not an obvious exit due to the internal configuration of the selecting chamber (4) that has a fold (7) at the bottom that is turned upwards and directed towards the inside of the selecting chamber (4), which serves to guide the wasps towards this selecting chamber (4) and hinder their exit.

The selecting chamber (4) acts as a filter for the insects that enter it, as it is made out of mesh and the sufficiently small size of its holes, larger than 5mm and smaller than 8mm, allows the bees to pass through but not the Asian wasps. These, since they cannot find the opening (8) through which they entered the selecting chamber (4), can only leave through the entry holes (5) which lead to the trap storage chambers (6). These holes (5) are located at the highest part of the selecting chamber (4) and connect to the trap storage chamber (6), leaving a space that is approximately 10-15cm high at the top of this storage chamber (6).

Due to their behavioural pattern during the departure flight, which is usually outwards and upwards, the wasps are much more likely to find the holes (5) to enter the trap storage chambers (6) than the narrow opening (8), due to the fact that its gradually decreasing section is unnoticeable to the wasps once they enter the area inside the selecting chamber (4), their guiding towards the holes (5) also being helped by the fold (7). Finally, the wasps gather in these trap storage chambers (6), whose regular emptying, possible due to these recipients being of a practicable nature, can be conveniently spaced.

The trap storage chambers (6) can have interior compartments (9) connected to each other via funnels (10) that make it more difficult for the wasps to return, until they finally become trapped at the end of the trap storage chamber (6), which can also be filled with sticky liquids or substances (11) that work as an insecticide and facilitate their immobilisation.

The trap storage chambers (6) also have small holes (13) that are larger than 5mm but smaller than 8mm, sufficient to allow bees to pass through them but that prevent the trapped wasps from passing through them. At the same time, these holes (13) provide ventilation that helps keep the internal temperature of these trap storage chambers (6) low.

## Claims

1. Wasp-capturing device, intended for its use in apiaries, **characterised by** comprising an enclosure or cover (1) made out of mesh or net that covers the top of the apiary, affecting at least the area located in front of the hives and adjoining their entrances, but without completely covering the apiary as it does not reach the ground on all sides, including at least one collecting element (2) for the gathering of the captured wasps consisting of a directing ramp (3) that guides the insects towards a selecting chamber (4), which the insects enter through an opening (8) of a "funnel-type" constricted configuration and at least one trap storage chamber (6) with access from the selecting chamber (4) through a hole (5).

2. Wasp-capturing device, according to claim 1, **characterised by** the selecting chamber (4) having a fold (7) in its lower part that is turned upwards and aimed towards the inside of the selecting chamber (4).

3. Wasp-capturing device, according to claim 1, **characterised by** the trap storage chambers (6) having interior compartments (9) connected to each other via funnels (10).

4. Wasp-capturing device, according to claims 1 and 2, **characterised by** the selecting chamber (4) being made from mesh whose holes are larger than 5mm and smaller than 8mm, sufficiently small to prevent the passage of the Asian wasp (Vespa velutina nigrithorax) but not that of the bees (Apis mellifera).

5. Wasp-capturing device, according to claims 1, 2 and 3, **characterised by** the entrance holes (5) from the selecting chamber (4) to the trap storage chambers (6) being located in the highest part of the selecting chamber (4).

6. Wasp-capturing device, according to claims 1 and 3, **characterised by** the trap storage chambers (6) having holes (13) that are larger than 5mm but smaller than 8mm, which allow the exit of bees (Apis melllifera) but not of Asian wasps (Vespa velutina nigrithorax) and provide ventilation.

7. Wasp-capturing device, according to claim 1, **characterised by** the hole (5) connecting to the trap storage chamber (6), leaving a space in the upper part of this storage chamber (6).

8. Wasp-capturing device, according to claim 1, **characterised by** the directing ramp (3) containing holes that are larger than 5mm and smaller than 8mm, which are too small to allow the passage of Asian wasps (Vespa velutina nigrithorax) but sufficiently large to also allow the passage of bees (Apis mellifera).
